# FASCICULE DE BREVET EUROPEEN

(11) **EP 1 999 649 B1**
(45) Date de publication et mention de la délivrance du brevet: **16.01.2019**
(21) Numéro de dépôt: 07731834.3
(22) Date de dépôt: 27.03.2007
(51) Int. Cl.: G06F 17/30

(54) **PROCEDE DE GENERATION D'UN FICHIER DE DESCRIPTION D'UN FLUX BINAIRE, DISPOSITIF ET PRODUIT PROGRAMME D'ORDINATEUR CORRESPONDANTS**
VERFAHREN ZUM ERZEUGEN EINER BITSTROM BESCHREIBENDEN DATEI, ENTSPRECHENDE EINRICHTUNG UND COMPUTERPROGRAMMPRODUKT
METHOD OF GENERATING A FILE DESCRIBING A BIT STREAM, CORRESPONDING DEVICE AND COMPUTER PROGRAM PRODUCT

(30) Priorité: 28.03.2006 FR 0602689
(43) Date de publication de la demande: 10.12.2008
(73) Titulaire: Orange, 75015 Paris (FR)
(72) Inventeur: DEVILLERS, Sylvain, 75116 Paris (FR)
(74) Mandataire: Vidon Brevets & Stratégie
(86) Numéro de dépôt international: PCT/FR2007/051026
(87) Numéro de publication internationale: WO 2007/110550

(56) Documents cités:
- DE SCHRIJVER D ET AL: "MPEG-21 bitstream syntax descriptions for scalable video codecs" MULTIMEDIA SYSTEMS, [Online] vol. 11, no. 5, 8 février 2006 (2006-02-08), pages 403-421, XP002409151 ISSN: 1432-1882 Extrait de l'Internet: URL:http://dx.doi.org/10.1007/s00530-006-0 021-5> [extrait le 2006-11-27]
- DEVILLERS S: "An Extension of BSDL for Multimedia Bitstream Syntax Description" LECTURE NOTES IN COMPUTER SCIENCE, 2003, pages 1216-1223, XP019001725 ISSN: 0302-9743 ISBN: 978-3-540-40788-1
- DEVILLERS S ET AL: "Bitstream Syntax Description-Based Adaptation in Streaming and Constrained Environments" IEEE TRANSACTIONS ON MULTIMEDIA IEEE USA, [Online] vol. 7, no. 3, juin 2005 (2005-06), pages 463-470, XP002409152 ISSN: 1520-9210 Extrait de l'Internet: URL:http://dx.doi.org/10.1109/TMM.2005.846 794> [extrait le 2006-11-27]

## Description

### 1. Domaine de l'invention

Le domaine de l'invention est celui des communications numériques, et notamment des communications à travers l'Internet.

L'invention concerne l'instanciation de paramètres lors de l'analyse syntaxique d'un flux binaire, composé d'une pluralité de champs, et plus précisément l'instanciation d'une description de ce flux binaire.

L'invention s'applique notamment, mais non exclusivement, à l'analyse syntaxique d'un flux binaire multimédia, et trouve notamment des applications dans le domaine de l'adaptation de contenus multimédia échelonnables (ou « scalables »), à transmettre à un destinataire en fonction du profil de l'utilisateur (écran, capacité de calcul, capacité de stockage, liaison utilisée pour la transmission, etc). Une telle adaptation permet notamment d'éviter de transmettre inutilement des données qui ne pourront pas être utilisées par le destinataire, et donc d'économiser de la bande passante.

On précise notamment que, dans toute la suite du document, on entend par « contenu multimédia » un flux binaire de type audio, vidéo, images, etc.

L'invention s'applique notamment au langage BSDL (en anglais « Bitstream Syntax Description Language », en français « langage de description de syntaxe de flux binaire »), tel que décrit dans la norme ISO/IEC 21000-7 (MPEG-21 Partie 7 : Digital Item Adaptation).

Plus précisément, le langage BDSL est une extension du langage XML Schema (en anglais « extensible Markup Language Schema», en français « schéma pour langage de balisage extensible »), spécifié par le consortium W3C (en anglais « World Wide Web consortium »). La recommandation XML Schema d'octobre 2004 est notamment disponible sur le site Internet http://www.w3.org/TR/xmlschema-1/ et xmlschema-2/. Ainsi, BSDL définit une syntaxe XML pour décrire la syntaxe d'un flux binaire conforme à un format donné.

### 2. Art antérieur

### 2.1 Le langage BSDL

Dans un souci de simplification et de clarté, on détaille ci-après uniquement l'art antérieur relatif à l'utilisation du langage BSDL pour décrire la syntaxe d'un flux binaire, encore appelé « bitstream ».

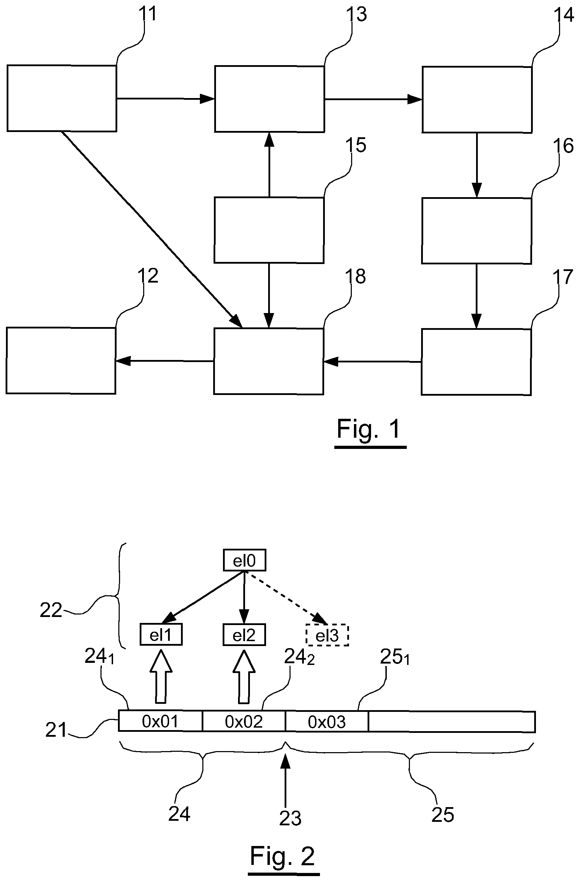

On rappelle, en relation avec la figure 1, un exemple d'utilisation du langage BSDL pour générer un flux binaire adapté 12 à partir d'un flux binaire source 11.

Pour ce faire, comme indiqué précédemment, BSDL définit une syntaxe XML pour décrire la syntaxe d'un flux binaire conforme à un format donné. Cette description est appelée « Bitstream Syntax Description » BSD.

Plus précisément, le fichier de description du flux binaire source 11, noté BSD source 14, est obtenu en utilisant un premier processeur 13, nommé BintoBSD, permettant de lire (« parser ») le flux binaire source 11 et d'instancier sa description.

Le fichier description XML du flux binaire source est alors transformé en un autre fichier de description XML, noté BSD transformée 17, en utilisant le langage XSLT 16 (en anglais « extensible Stylesheet Language Transformations », en français « transformation en langage extensible de feuille de style »).

Le flux binaire adapté 12 est alors obtenu en utilisant un deuxième processeur 18, nommé BSDtoBin, permettant de lire la description BSD transformée 17 et générer le flux binaire adapté 12 correspondant.

Pour cela, ces deux processeurs BintoBSD 13 et BSDtoBin 18 utilisent un document XML, nommé « Bitstream Syntax Schéma » ou « BS Schéma » 15, qui définit la structure du format donné et les types des champs définis par ce format.

On décrit ci-après plus précisément le fonctionnement du premier processeur BintoBSD 13, permettant de lire un flux binaire et de générer son fichier de description BSD.

On rappelle notamment que ce processus est progressif, ce qui signifie qu'à un point courant du « bitstream » (autrement dit à un instant t lors de la lecture du flux binaire), tous les champs déjà lus sont décrits par le fichier de description BSD partiellement instanciée.

Dans la suite du document, on qualifie d'« aval » la partie du flux binaire déjà lue (et donc déjà décrite par la description BSD partiellement instanciée) et d'« amont » la partie non encore lue.

Plus précisément, lors du processus de lecture du flux binaire, il est courant que le type, le nombre d'occurrences et/ou la taille d'un champ du flux binaire, entre autres, soi(en)t déterminé(s) par la valeur d'un autre champ présent en aval ou amont dans le flux binaire.

Selon les techniques de l'art antérieur, le langage BSDL définit deux façons de référencer un tel champ selon qu'il soit situé en aval ou en amont de la position courante dans le flux binaire.
1. Lorsqu'un tel champ se situe en aval du champ courant, il a déjà été lu, et la valeur de ce champ « aval » est donc présente dans le fichier de description BSD partiellement instanciée. Le langage BSDL permet donc de référencer un élément XML correspondant à ce champ. Pour cela, BSDL utilise le langage XPath, tel que décrit dans une recommandation du W3C de novembre 1999 (« XML Path Language », Version 1.0, W3C Recommendation 16, disponible sur le site Internet http://www.w3.org/TR/xpath), et plus précisément le chemin de localisation de l'élément XML correspondant à ce champ. On rappelle que le langage XPath est un langage d'expression, permettant de spécifier une expression mettant en jeu des opérateurs arithmétiques et logiques, des fonctions, des constantes, des variables, et des chemins de localisation. Un chemin de localisation, noté « LocationPath », permet ainsi de localiser un ensemble de noeuds tels que des éléments et des attributs dans un document XML. Ainsi, lorsqu'un tel champ se situe en aval du champ courant, BSDL utilise les chemins de localisation XPath pour référencer un élément dans la BSD partiellement instanciée.
2. Lorsqu'un tel champ se situe en amont du champ courant, il n'est pas encore présent dans le fichier de description BSD partiellement instanciée. Le champ est alors référencé par sa localisation dans le flux binaire. On rappelle que, dans ce cas, le champ présent en amont est généralement situé à proximité de la position courante dans le flux binaire, et est donc présent dans le tampon de lecture.

Le langage BSDL permet ensuite de spécifier plusieurs types d'utilisation d'un champ selon qu'il soit situé en amont ou en aval de la position courante de la lecture du flux binaire.

Par exemple, le langage BSDL permet d'utiliser la valeur d'un champ présent en aval pour spécifier notamment :
- le nombre d'occurrences d'un élément correspondant à un champ à lire, ce qui correspond au nombre de fois que ce champ doit être lu dans le flux binaire ;
- la taille d'un champ à lire ;
- le type d'un champ à lire ;
- etc.

Pour cela, BSDL utilise l'expression XPath pouvant inclure une référence à un ou plusieurs champs situés en aval via leur chemin de localisation. Cette expression XPath est évaluée par rapport aux éléments crées dans la BSD partielle, et son évaluation peut, selon les cas, donner une valeur boolénne (vrai ou faux), ou un entier.

Lorsque le champ est en amont, les possibilités d'utilisation sont en revanche plus réduites, selon ces techniques de l'art antérieur. En l'occurrence, BSDL n'utilise le champ amont que pour décider de l'instanciation ou non d'un élément. Ainsi, l'attribut bs2:ifNext appliqué à la déclaration d'un élément dans le document XML « BS Schéma » (15), éventuellement combiné aux attributs bs2:lookAhead et bs2:iNextMask, spécifie que l'élément auquel se réfère l'attribut est instancié si et seulement si le champ en amont a une valeur prédéterminée

"MPEG-21 bitstream syntax descriptions for scalable video codecs", Multimedia Systems, Volume 11, Nr. 5, pages 403-421 présente une utilisation du BDSL en conjugaison avec les schémas BSS, le parseur « BintoBSD » et l'adaptateur de flux binaire «BSDtobin ».

### 2.2 Inconvénients de l'art antérieur

Malheureusement, la technique mise en oeuvre actuellement pour l'instanciation d'un fichier de description d'un flux binaire souffre de deux principaux inconvénients.

Ainsi, pour l'utilisation de champs du flux binaire situés en aval par rapport à une position courante lors de la lecture du flux, le langage BSDL repose sur l'utilisation du chemin de localisation XPath pour référencer ces champs, comme décrit précédemment. Or pour pouvoir évaluer ce chemin de localisation XPath, le processeur BintoBSD 13 doit stocker en mémoire le fichier de description BSD partiellement instanciée. Or il est à noter que la taille de ce fichier de description augmente au cours de la lecture du flux binaire.

Un inconvénient majeur de cette technique de l'art antérieur, pour les champs situés en aval, provient donc de la consommation mémoire, qui peut devenir prohibitive lorsque le flux binaire a une taille importante, et a fortiori lorsque le flux binaire est généré en continu, ce qui est par exemple le cas pour une vidéo encodée en continu (encodage à la volée).

En effet, la forte consommation de ressources mémoire peut notamment dégrader les performances de la technique d'instanciation, voire la faire échouer.

Par ailleurs, pour l'utilisation de champs du flux binaire situés en amont par rapport à une position courante lors de la lecture du flux, le langage BSDL limite l'utilisation de ces champs à un test sur l'instanciation de l'élément.

Un inconvénient majeur de cette technique de l'art antérieur, pour les champs situés en amont, est qu'elle ne permet pas de tenir compte de caractéristiques du champ à lire, comme sa taille par exemple, déterminées par un champ en amont. Il n'est en effet pas possible de spécifier ces caractéristiques avec le langage BSDL selon cette technique de l'art antérieur.

### 2.3 Solutions alternatives de l'art antérieur

Pour pallier l'inconvénient lié à la forte consommation mémoire lors du stockage de la BSD partielle, pour les champs situés en aval, une solution alternative a été proposée par l'Université de Ghent dans la contribution MPEG M12217 (ISO/IEC JTC1/SC29/WG11 MPEG2005/M12217, "Context-related attributes for MPEG-21 BSDL", Davy De Schrijver , Wesley De Neve, et Rik Van de Walle, Juillet 2005, Poznan, Pologne).

Cette solution permet notamment de sauvegarder en mémoire uniquement une partie du fichier de description BSD nécessaire pour l'évaluation des expressions XPath.

Cette solution présente toutefois de nombreux inconvénients.

Ainsi, cette solution de l'art antérieur requiert toujours de sauvegarder une partie de la BSD (en pratique, classiquement un sous-arbre), ce qui consomme de la mémoire inutilement, alors que seules les valeurs de quelques éléments de ce sous-arbre sont utilisées par l'expression XPath.

De plus, les champs situés en aval sont toujours référencés par un chemin de localisation XPath, dont l'évaluation consomme des ressources de calcul.

Finalement, cette technique de l'art antérieur ne permet pas de pallier aux inconvénients liés à la limitation de l'utilisation des champs situés en amont à un test sur l'instanciation de l'élément.

### 3. Exposé de l'invention

L'invention propose une solution qui ne présente pas tous ces inconvénients de l'art antérieur, sous la forme d'un procédé de génération d'un fichier de description d'un flux binaire à partir d'un schéma de description décrivant une structure et un contenu conformes à un format prédéterminé et comprenant un ensemble d'attributs et d'éléments, ledit flux binaire étant composé d'une pluralité de champs.

Selon l'invention, un tel procédé comprend :
- une étape d'assignation d'au moins une valeur d'au moins un champ identifié dudit flux à au moins une variable définie par un attribut dudit schéma de description, dit attribut d'assignation ;
- une étape de stockage de ladite au moins une variable ;
- une étape de détermination d'au moins une caractéristique d'au moins un élément dudit fichier de description, à partir d'une évaluation d'une expression conditionnelle portant sur ladite au moins une valeur ;
- une étape de génération d'une portion dudit fichier de description en fonction de la ou desdites caractéristiques déterminées lors de ladite étape de détermination.

Ainsi, l'invention repose sur une approche tout à fait nouvelle et inventive de la génération d'un fichier de description selon laquelle on définit dans le schéma de description au moins une variable portant la valeur d'un champ identifié dans le flux binaire au moyen d'un attribut du schéma de description.

Ce champ identifié peut notamment correspondre à un champ situé en aval ou en amont d'un champ à lire du flux binaire, par rapport au sens de lecture du flux binaire.

Ainsi, selon l'invention, on mémorise cette variable pour pouvoir ensuite déterminer des caractéristiques du champ à lire, soit autrement dit des caractéristiques de l'élément du fichier de description correspondant au champ à lire.

On optimise ainsi la consommation en ressource mémoire et en temps de traitement d'un processeur mettant en oeuvre le procédé de génération selon l'invention, en référençant les valeurs de certains champs situés en amont et en aval d'un champ à lire dans des variables, et en utilisant les valeurs stockées dans ces variables pour déterminer certaines caractéristiques du champ à lire.

On peut notamment remarquer que la technique proposée est générique, puisqu'elle est indépendante du format de codage utilisé : c'est le schéma de description qui définit la structure et le contenu du signal binaire, conformément à un format prédéterminé.

Selon une caractéristique particulière, l'attribut d'assignation comprend au moins un paramètre comprenant au moins ladite variable.

Chaque paramètre comprend ainsi au moins une variable, dans laquelle est mémorisée la valeur d'un champ identifié du flux binaire. La valeur d'un champ identifié est donc mémorisée et référencée par le nom de cette variable.

Selon un mode de réalisation particulier, on considère notamment :
- qu'un paramètre d'un attribut d'assignation comprend uniquement la variable dans laquelle est mémorisée la valeur d'un champ identifié, lorsque le champ identifié est situé en aval d'un champ à lire, et
- qu'un paramètre d'un attribut d'assignation comprend la variable dans laquelle est mémorisée la valeur d'un champ identifié et au moins une information de localisation d'un champ amont, lorsque le champ identifié est situé en amont d'un champ à lire.

Selon ce mode de réalisation, lorsqu'un champ identifié correspond à un champ situé en amont d'un champ à lire du flux binaire par rapport au sens de lecture du flux binaire, au moins un paramètre d'un attribut d'assignation comprend par exemple un triplet comprenant ladite variable et au moins deux informations d'identification appartenant au groupe comprenant au moins :
- une position de début de champ dans ledit flux binaire,
- une position de fin de champ dans ledit flux binaire,
- une longueur de champ dans ledit flux binaire,
lesdites informations d'identification permettant d'identifier ledit champ identifié.

Chaque paramètre comprend donc un triplet portant deux valeurs permettant notamment d'identifier l'adresse du champ amont dans le bitstream, et une variable permettant de stocker la valeur de ce champ. Le champ amont est donc lu et sa valeur est stockée dans une mémoire de stockage référencée par le nom de la variable.

Par exemple, le champ identifié correspond à un champ débutant à ladite position de début et présentant ladite longueur de champ, ou à un champ débutant à ladite position de début et finissant à ladite position de fin, etc.

Lorsqu'un champ identifié correspond à un champ situé en aval d'un champ à lire du flux binaire par rapport au sens de lecture du flux binaire, ledit champ identifié correspond à un champ en cours de lecture dans ledit flux binaire.

La valeur du champ aval est donc mémorisée immédiatement après sa lecture, et référencée par le nom de la variable.

En particulier, l'étape d'évaluation fait référence à ladite variable, dans le schéma de description.

On appelle donc directement ladite variable par son nom pour récupérer la valeur d'un champ identifié et utiliser cette valeur pour tester une expression conditionnelle déterminant certaines caractéristiques d'au moins un élément du fichier de description.

Par exemple, ladite au moins une caractéristique appartient au groupe comprenant au moins :
- un type d'un élément ;
- une longueur d'un élément ;
- un nombre d'occurrence d'un élément.

On peut notamment remarquer que le nombre d'occurrence d'un élément peut être égal à 0. On peut ainsi tester la présence ou l'absence d'un élément.

Selon un aspect particulier de l'invention, le flux binaire est un flux multimédia scalable. L'invention s'applique ainsi par exemple à l'adaptation de contenus multimédia scalables.

Selon un mode de réalisation particulier, le fichier de description est de type Bitstream Syntax Description et le schéma de description est de type Bitstream Syntax Schema selon la norme MPEG-21 Partie 7. On utilise ainsi le langage BSDL pour décrire la syntaxe d'un flux binaire.

Dans un autre mode de réalisation, l'invention concerne un dispositif de génération d'un fichier de description d'un flux binaire, à partir d'un schéma de description décrivant une structure et un contenu conformes à un format prédéterminé et comprenant un ensemble d'attributs et d'éléments, ledit flux binaire étant composé d'une pluralité de champs.

Ce dispositif comprend :
- des moyens d'assignation d'au moins une valeur d'au moins un champ identifié dudit flux à au moins une variable définie par un attribut dudit schéma de description, dit attribut d'assignation ;
- des moyens de stockage de ladite au moins une variable ;
- des moyens de détermination d'au moins une caractéristique d'au moins un élément dudit fichier de description, à partir d'une évaluation d'une expression conditionnelle portant sur ladite au moins une valeur ;
- des moyens de génération d'une portion dudit fichier de description en fonction de la ou desdites caractéristiques déterminées lors de ladite étape de détermination.

Un tel dispositif est notamment adapté à mettre en oeuvre le procédé de génération d'un fichier de description d'un flux binaire tel décrit précédemment.

Un autre aspect de l'invention concerne également un produit programme d'ordinateur téléchargeable depuis un réseau de communication et/ou enregistré sur un support lisible par ordinateur et/ou exécutable par un processeur comprenant des instructions de code de programme pour l'exécution des étapes du procédé de génération d'un fichier de description tel que décrit précédemment, lorsque ledit programme est exécuté sur un ordinateur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1, commentée en relation avec l'art antérieur, présente un exemple d'utilisation du langage BSDL pour générer un flux binaire adapté à partir d'un flux binaire source ;
- les figures 2 et 3 illustrent chacune un flux binaire et la représentation du fichier de description BSD associé, sous la forme d'un sous-arbre ;
- la figure 4 présente la structure d'un dispositif de génération d'un fichier de description mettant en oeuvre une technique d'instanciation de la description d'un flux binaire selon un mode de réalisation particulier de l'invention.

### 5. Description d'un mode de réalisation de l'invention

### 5.1 Principe général

L'invention permet la génération d'un fichier de description d'un flux binaire à partir de l'analyse syntaxique du flux binaire et d'un schéma de description.

On rappelle notamment qu'un tel schéma permet de définir la structure d'un format donné et les types des champs définis par ce format. La solution proposée est donc indépendante du format de codage, puisque celui-ci est donné par le schéma de description.

Le principe général de l'invention repose sur l'utilisation, dans le schéma de description, d'au moins un attribut d'assignation comprenant un ou plusieurs paramètre(s) comprenant chacun au moins une variable, dans laquelle est mémorisée la valeur d'un champ identifié du flux binaire. La valeur de ce champ identifié permet notamment de déterminer une caractéristique d'un élément du fichier de description correspond à un champ à lire du flux binaire.

Par exemple, un tel attribut d'assignation est noté « AssignPost » lorsqu'au moins une caractéristique d'un champ à lire est déterminée par la valeur d'un autre champ présent en aval dans le flux binaire, dit champ aval, et « AssignePre » lorsqu'au moins une caractéristique d'un champ à lire est déterminée par la valeur d'un autre champ présent en amont dans le flux binaire, dit champ amont.

On rappelle qu'on entend ici par « caractéristique » le type, le nombre d'occurrences, la taille, etc, d'un élément correspondant à un champ.

Ainsi, lorsqu'une caractéristique d'un élément correspondant à un champ du flux binaire à lire est déterminée par la valeur d'un champ aval, on lit le champ aval du bitstream d'après les informations portée par un schéma de description spécifiant le format du flux numérique, on attribue la valeur lue à une variable (référencé par un nom), et on utilise cette valeur pour tester une expression déterminant au moins une caractéristique d'un élément du fichier de description correspondant au champ à lire.

Lorsqu'une caractéristique d'un élément correspondant à un champ du flux binaire à lire est déterminée par la valeur d'un champ amont, on lit le ou les champs amont du flux identifiés (par exemple par leur position dans le bitstream), on attribue la ou les valeurs lues à une ou plusieurs variables (référencées par un nom), et on utilise cette ou ces valeur(s) pour tester une expression déterminant au moins une caractéristique d'un élément du fichier de description correspondant au champ à lire.

L'invention permet ainsi, selon au moins un mode particulier de réalisation, de pallier certains inconvénients de l'art antérieur, et notamment de limiter la consommation mémoire requise par l'analyse syntaxique du flux binaire et l'instanciation de la description XML de ce flux.

Autrement dit, l'invention propose une solution permettant de référencer des champs situés en amont et en aval en optimisant la consommation de la mémoire et du temps de traitement, et d'utiliser la valeur de ces champs au cours de la lecture du flux binaire, pour déterminer au moins une caractéristique d'un champ à lire, selon au moins un mode particulier de réalisation.

### 5.2 Utilisation du langage BSDL

On décrit dans toute la suite de la description un mode de réalisation particulier de l'invention, relatif à l'utilisation du langage BSDL pour décrire la syntaxe d'un flux binaire multimédia (« bitstream »).

Bien entendu, cet exemple n'est pas limitatif, et les principes de l'invention décrits ci-après en détail peuvent être mis en oeuvre en utilisant d'autres langages.

Dans le cadre de l'utilisation du langage BSDL, le mode de réalisation décrit de l'invention porte sur la partie du langage appelée BSDL-2, correspondant au processeur BintoBSD tel que présenté en relation avec l'art antérieur, qui permet de lire un flux binaire et d'instancier sa description.

Ainsi, par souci de clarté, on utilise dans la suite une notation comportant un préfixe pour référencer un élément de syntaxe XML spécifié dans un espace de noms donné :
- le préfixe bs2: est ainsi utilisé pour qualifier un élément de syntaxe défini par BSDL-2 ;
- le préfixe bs1: pour qualifier un élément de syntaxe défini par BSDL-1 ; et
- le préfixe xs: pour qualifier un élément de syntaxe défini par XML Schema.

Comme indiqué précédemment, le principe général de l'invention repose sur l'utilisation, dans le schéma de description, d'au moins un attribut d'assignation comprenant un ou plusieurs paramètres. Ces paramètres sont déclarés dans le BS Schema et instanciés de deux façons différentes, selon que les caractéristiques d'un élément correspondant à un champ à lire sont déterminées dans un champ situé en amont ou en aval du champ à lire.

Ainsi, dans un premier cas, le paramètre est associé à un champ du bitstream situé en aval du champ à lire, noté « champ aval ». Ce paramètre comprend au moins une variable, permettant notamment de stocker la valeur de ce champ aval. La valeur du champ aval est donc mémorisée immédiatement après sa lecture, et référencée par le nom de la variable. Il n'est donc pas nécessaire, selon ce mode de réalisation particulier de l'invention, de sauvegarder tout le sous-arbre représentatif du fichier de description BSD partiellement instanciée pour pouvoir référencer la valeur de ce champ aval via un chemin de localisation XPath, comme nécessaire selon l'art antérieur.

Dans un deuxième cas, le paramètre est associé à un champ du bitstream situé en amont du champ à lire, noté « champ amont ». Dans ce cas, un attribut d'assignation du schéma de description comprend un ou plusieurs paramètres, portant chacun une variable et au moins deux informations d'identification, regroupées sous la forme d'un triplet. Chaque paramètre comprend donc un triplet portant deux valeurs permettant notamment d'identifier l'adresse du champ amont dans le bitstream, et une variable permettant de stocker la valeur de ce champ. Le champ amont est donc lu et sa valeur est stockée dans une mémoire de stockage référencée par le nom de la variable.

Dans les deux cas, une fois le champ aval ou amont lu, la variable stockant la valeur du champ peut ensuite être utilisée dans une expression XPath spécifiant les caractéristiques (nombre d'occurrences, type, taille, ...) d'un élément correspondant au champ à lire.

### A) Cas « aval » selon l'art antérieur

On présente ci-après, en relation avec la figure 2 et l'annexe 1, qui fait partie intégrante de la description, une technique d'analyse syntaxique d'un flux binaire multimédia et de génération d'un fichier de description (BSD) selon l'art antérieur.

On précise notamment que dans les annexes 1, 2 et 3 présentant des exemples de documents XML (schémas de description et fichier de description BSD), les commentaires sont en italique et encadrés par les caractères "< ! --" et "-->".

Plus précisément, la figure 2 illustre un exemple de flux binaire 21 et la représentation du fichier de description BSD partielle associée, sous la forme d'un sous-arbre 22.

Selon cet exemple, le bitstream 21 porte successivement les valeurs 0x01, 0x02, 0x03, etc.

La flèche 23 indique la position de la lecture du flux binaire à un instant t donné.

Ainsi, comme indiqué précédemment, les champs 24 correspondent donc à la partie du flux déjà lue, qualifiée d'aval, et les champs 25 correspondent à la partie du flux non encore lue, qualifiée d'amont.

Plus précisément, le format de ce flux indique que ce flux contient deux champs d'un octet de long 24₁ et 24₂, et optionnellement un troisième champ 25₁ qui est présent si et seulement si la valeur du premier champ 24₁ est égale à 1.

Ainsi, le schéma de description (Bitstream Syntax Schema ou BS Schema) présenté en annexe 1, partie A, spécifie ce format en BSDL, en déclarant trois éléments el1, el2 et el3 de type xs : unsignedByte, l'élément el3 étant optionnel (son nombre d'occurrence pouvant être égal à 0) :

```
      <xs:element name="el1" type="xs:unsignedByte"/>
      <xs:element name="el2" type="xs:unsignedByte"/>
      <xs:element name="el3" type="xs:unsignedByte" minOccurs="0"
                   bs2:if="/el0/el1 = 1"/>
```

L'attribut b2 : if contenu dans la déclaration de l'élément el3 spécifie la condition de l'occurrence de cet élément par l'expression XPath " / el0/el1 = 1". Cette expression XPath utilise notamment le chemin de localisation "/el0/el1" qui référence l'élément el1.

Selon cette technique de l'art antérieur, le processeur BintoBSD lit donc le flux binaire selon l'information fournie par le BS Schema tel que présenté en annexe 1, partie A : il lit les deux champs 24₁ et 24₂ d'une longueur d'un octet et instancie les éléments correspondants el1 et el2 dans le fichier de description BSD.

On rappelle notamment que le contenu texte de ces éléments est égal aux valeurs des champs.

L'annexe 1 présente également, en partie B, le fichier de description partielle BSD du flux binaire tel qu'instancié après que le processeur BintoBSD ait lu les deux premiers champs 24₁ et 24₂ selon cet exemple. Pour savoir s'il doit lire le troisième champ correspondant à el3, le processeur BintoBSD doit alors évaluer l'expression XPath "/el0/el1 = 1" vis-à-vis de cette description partielle.

On constate donc que pour réaliser ce test, le processeur BintoBSD doit stocker en mémoire la BSD partiellement instanciée.

### B) Cas « aval » selon l'invention

On présente désormais, en relation avec la figure 2 et l'annexe 2, qui fait partie intégrante de la description, une technique d'analyse syntaxique d'un flux binaire multimédia, avantageusement scalable, et de génération d'un fichier de description (BSD) selon un mode de réalisation particulier de l'invention.

On considère notamment dans ce cas qu'une caractéristique du champ du flux binaire à lire 25₁ (spécification de l'occurrence d'un élément par exemple) est déterminée par la valeur d'au moins un champ présent en aval dans le flux binaire, dit champ aval, par exemple le champ 24₁.

Plus précisément, selon ce mode de réalisation particulier de l'invention, lors de la déclaration des trois éléments el1, el2 et el3 dans le schéma de description présenté en annexe 2, partie A (qui est équivalent au schéma de description selon l'art antérieur, présenté en annexe 1, partie A), une information est ajoutée à la déclaration de l'élément el1 sous la forme d'un attribut d'assignation bs2:assignPost, qui indique au processeur BintoBSD qu'il doit stocker la valeur du champ aval après l'avoir lue, et la stocker sous la variable par1.

Ainsi, la déclaration des trois éléments el1, e12 et el3 est réalisée de la façon suivante :

```
 <xs:element name="el1" type="xs:unsignedByte" bs2:assignPost="par1"/>
 <xs:element name="el2" type="xs:unsignedByte"/>
 <xs:element name="el3" type="xs:unsignedByte" minOccurs="0"
            bs2:if="$parl = 1"/>
```

Ainsi, selon cet exemple, l'attribut d'assignation assignPost comprend un seul paramètre, permettant d'assigner une variable nommée par1 à l'élément el1 du schéma de description, et de stocker dans cette variable par1 la valeur du champ aval après l'avoir lue.

Selon ce mode de réalisation, l'attribut bs2 : assignPost comprend donc un paramètre comprenant le nom de la variable qui sera référencée par la suite.

L'expression XPath utilisée par l'attribut bs2 : if dans la déclaration de l'élément el3 est alors remplacée par l'expression : "$par1 = 1".

On rappelle en effet que la syntaxe $par1 en langage XPath référence la variable nommée par1. En effet, XPath définit une syntaxe pour référencer une variable, sous la forme $nom. L'expression utilisée pour spécifier la condition d'occurrence de l'élément el3 est donc toujours conforme au langage XPath, ce qui permet à un processeur conforme à XPath de l'évaluer.

On voit ainsi que pour évaluer cette expression XPath, le processeur BintoBSD n'a plus besoin de stocker la BSD partielle représentée, mais seulement la valeur du champ 24₁ sous la référence $par1.

On présente également en annexe 2, partie B, un autre exemple de schéma de description où l'expression XPath spécifie une contrainte sur le nombre d'occurrences d'un élément.

La déclaration des éléments est la même que décrite précédemment, mais le schéma de description indique que le processeur BintoBSD doit instancier l'élément el3 un nombre de fois égal à la valeur de la variable par1 plus un :

```
<xs:element name="el1" type="xs:unsignedByte" bs2:assignPost="par1"/>
 <xs:element name="el2" type="xs:unsignedByte"/>
 <xs:element name="el3" type="xs:unsignedByte" minOccurs="0"
            bs2:nOccurs="$par1 + 1" maxOccurs="unbounded"/>
```

On présente finalement en annexe 2, partie C, un autre exemple de schéma de description où l'expression XPath spécifie une contrainte sur le type d'un élément.

De nouveau, la déclaration des éléments el1, el2 et el3 est la même que décrite précédemment, mais le schéma de description indique que le type de l'élément el3 (à savoir hexadécimal) doit avoir une longueur égale à la valeur de la variable par1 plus un. Le processeur BintoBSD lira donc un nombre d'octets pour l'élément el3 spécifié par l'expression :
bs2:length value="$par1 + 1"

### C) Cas « amont » selon l'invention

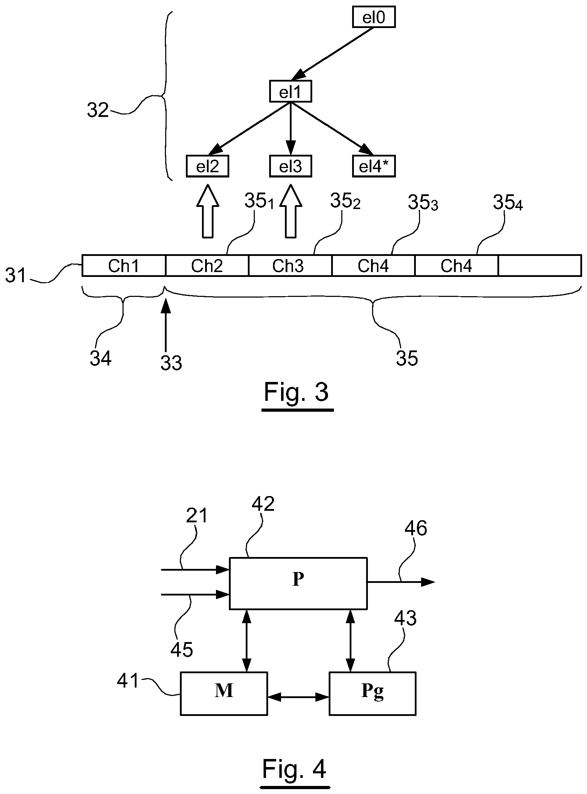

On présente finalement, en relation avec la figure 3 et l'annexe 3, qui fait partie intégrante de la description, une technique d'analyse syntaxique d'un flux binaire multimédia, avantageusement scalable, et de génération d'un fichier de description (BSD) selon un mode de réalisation particulier de l'invention, en considérant qu'une caractéristique du champ du flux binaire à lire est déterminée par la valeur d'au moins un champ présent en amont dans le flux binaire.

Plus précisément, la figure 3 illustre un exemple de flux binaire 31 et la représentation du fichier de description BSD partielle associée, sous la forme d'un sous-arbre 32. La flèche 33 indique la position de lecture du flux binaire à un instant t donné.

Comme indiqué précédemment, le champ 34 correspond à une partie du flux déjà lue, qualifiée d'aval, et les champs 35 (35₁, 35₂, 35₃, 35₄) correspondent à une partie du flux non encore lue, qualifiée d'amont.

L'annexe 3 donne un exemple de schéma de description dans lequel deux champs situés en amont définissent une condition sur l'instanciation et le type de l'élément el1 :

```
 <xs:element name="el1" bs2:assignPre="par2 0 32 par3 32 32"
                         bs2:if="$par3 = 'ftyp'" minOccurs="0">
  <xs:complexType bs2:layerLength="$par2">
```

Plus précisément, selon cet exemple, l'attribut d'assignation assignPre comprend deux paramètres («par2 0 32 » et « par3 32 32»), comprenant chacun un triplet indiquant respectivement le nom par lequel la variable portant la valeur du champ amont est référencée, la position en nombre de bits par rapport au point courant et la longueur du champ amont portant des informations sur le champ à lire (nom, début, longueur).

Ainsi, chaque triplet permettant d'assigner une variable nommée par2 (respectivement par3) à un élément du schéma de description, d'identifier un champ amont situé 0 bits (respectivement 32 bits) en amont de la flèche 33, et de longueur 32 bits (respectivement 32 bits), et de stocker dans cette variable par2 (respectivement par3) la valeur du champ amont après l'avoir lue.

Autrement dit, selon ce mode de réalisation de l'invention, le processeur BintoBSD commence par lire, dans un premier temps, les deux champs du flux binaire identifiés par l'attribut bs2 : assignPre lorsqu'il essaie d'instancier l'élément el1, et stocke les valeurs de ces champs dans des variables par2 et par3.

Dans un deuxième temps, le processeur évalue l'expression XPath contenue dans l'attribut bs2 : if pour vérifier s'il doit instancier l'élément el1. L'attribut bs2:if spécifie donc une condition pour que l'élément el1 soit instancié.

Cette condition porte sur la valeur d'un champ amont qui se situe 32 bits après le point courant (flèche 33) et a une longueur de 32 bits. Ce champ doit être égal à la séquence d'octets représentée par la séquence de quatre caractères 'ftyp'. On teste donc la valeur de la variable par3.

Si la condition est remplie, alors le processeur instancie l'élément el1, puis évalue l'expression XPath comprise dans l'attribut bs2 : layerLength. L'attribut bs2:layerLength, présent dans la définition du type (xs : complexType), définit la taille cumulée des sous-éléments de l'élément el1. Plus précisément, il utilise la variable par2 pour déterminer la taille cumulée des sous-éléments de l'élément el1. Il peut ensuite instancier les sous-éléments el2, el3 et autant de sous-élément el4 que la taille cumulée de el1 le permet.

On rappelle que l'élément el1 est de type complexe car il comprend des sous-éléments (c'est un noeud de l'arbre), tandis que les éléments el2, el3 et el4 sont de type simple (ce sont des feuilles de l'arbre).

Un tel mécanisme est nécessaire dans cet exemple puisque le nombre d'occurrences de l'élément el4 n'est, a priori, pas spécifié dans le schéma de description : l'élément el1 comprend autant d'éléments el4 que sa taille cumulée spécifiée par b2 : layerLength le permet.

Dans cet exemple, la lecture du flux binaire se fait en plusieurs couches, une première couche permettant de lire tout le flux, puis une deuxième couche pour l'élément el1, etc. La valeur de la taille cumulée est spécifiée par un champ de 32 bits situé immédiatement en amont.

On constate finalement que la connaissance des valeurs des champs identifiés par les deux paramètres est nécessaire au moment de l'instanciation de l'élément el1, alors que les éléments correspondants n'ont pas encore été lus dans le fichier de description BSD.

### 5.3 Structure du dispositif de génération d'un fichier de description

On présente désormais, en relation avec la figure 4, la structure simplifiée d'un dispositif de génération d'un fichier de description mettant en oeuvre une technique d'instanciation selon le mode de réalisation particulier décrit ci-dessus.

Un tel dispositif de génération comprend une mémoire 41, une unité de traitement 42, équipée par exemple d'un microprocesseur µP, et pilotée par le programme d'ordinateur 43, mettant en oeuvre le procédé de génération d'un fichier de description selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée un flux binaire (21, 31) et un schéma de description 45. Le microprocesseur de l'unité de traitement 42 met en oeuvre les étapes du procédé de génération d'un fichier de description décrit précédemment, pour déterminer un fichier de description BSD 46, selon les instructions du programme d'ordinateur 43.

### ANNEXE 1 : ART ANTERIEUR

### A. Exemple de schéma de description « Bitstream Syntax Schéma » selon l'art antérieur :

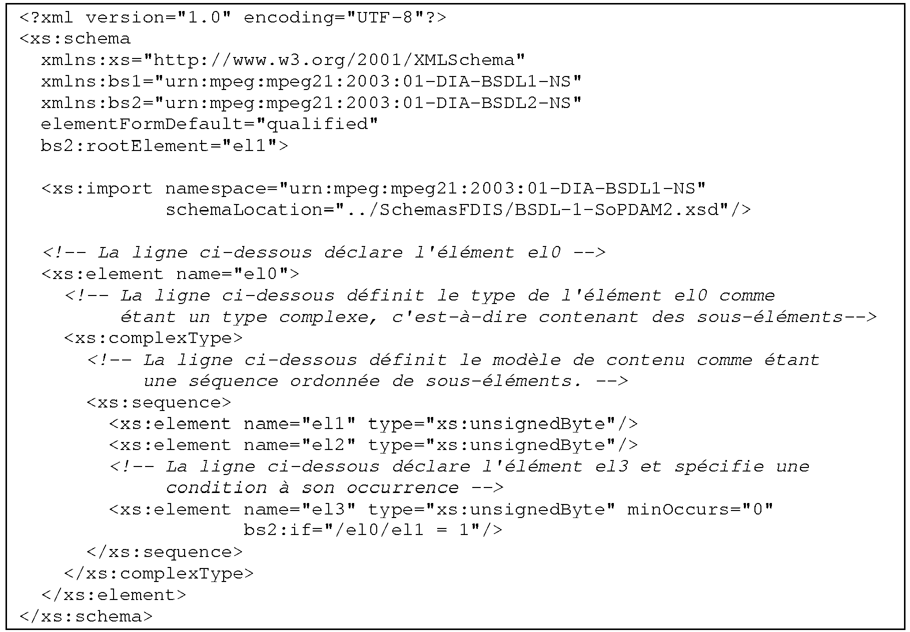

### B. Exemple fichier de description partielle « Bitstream Syntax Description » associé :

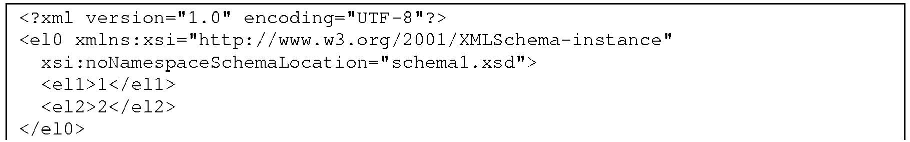

### ANNEXE 2 : COMMANDE ASSIGNPOST

### A. Exemple de schéma de description « Bitstream Syntax Schéma » spécifiant une contrainte sur l'occurrence d'un élément selon un mode de réalisation de l'invention :

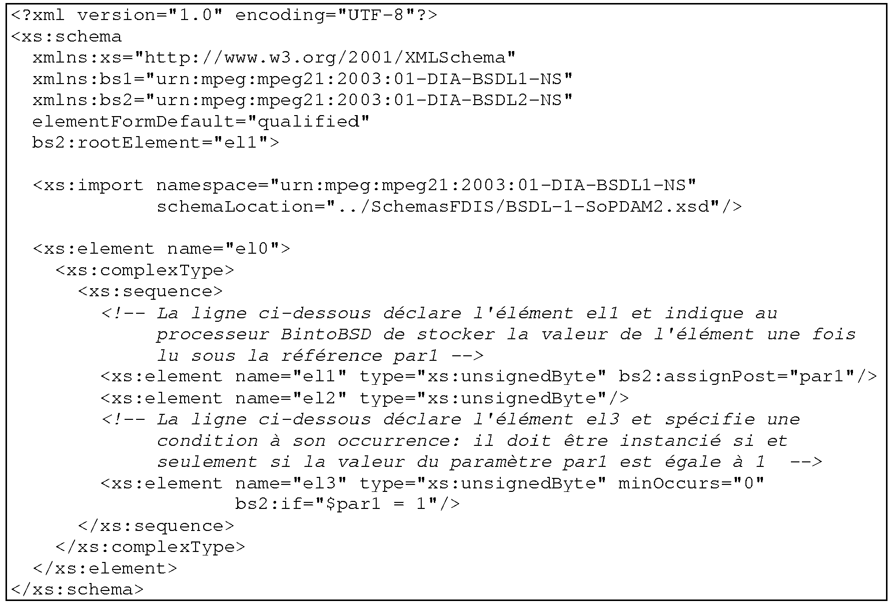

### B. Exemple de schéma de description « Bitstream Syntax Schéma » spécifiant une contrainte sur le nombre d'occurrences d'un élément selon un mode de réalisation de l'invention :

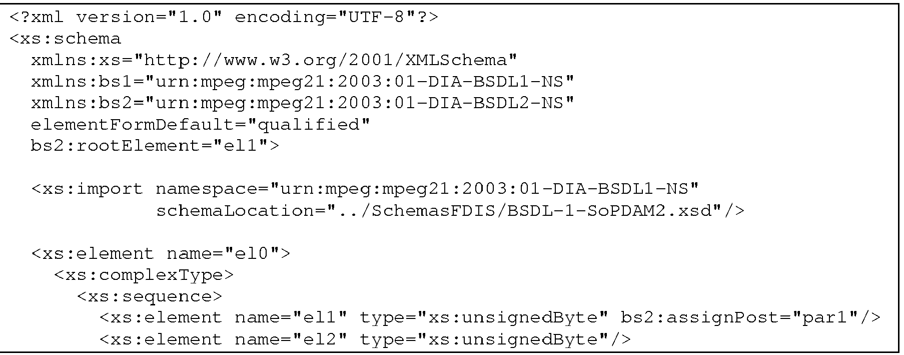

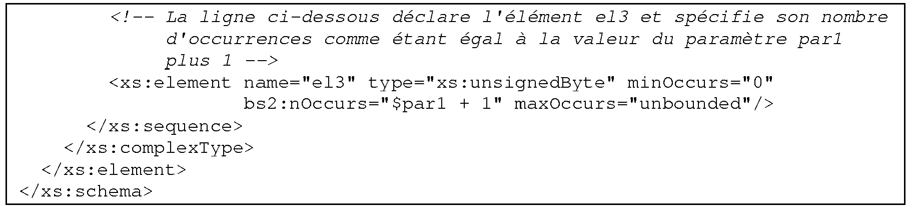

### C. Exemple de schéma de description « Bitstream Syntax Schéma » spécifiant une contrainte sur le type d'un élément selon un mode de réalisation de l'invention :

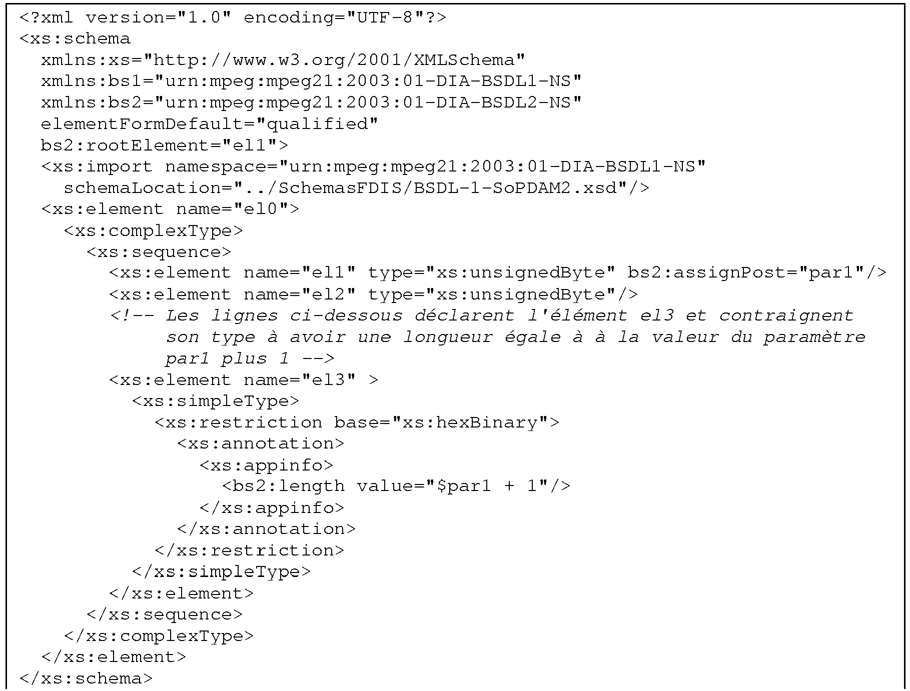

### ANNEXE 3 : COMMANDE ASSIGNPRE

Exemple de schéma de description « Bitstream Syntax Schéma » spécifiant une contrainte sur la taille cumulée des sous-éléments d'un élément selon un mode de réalisation de l'invention :

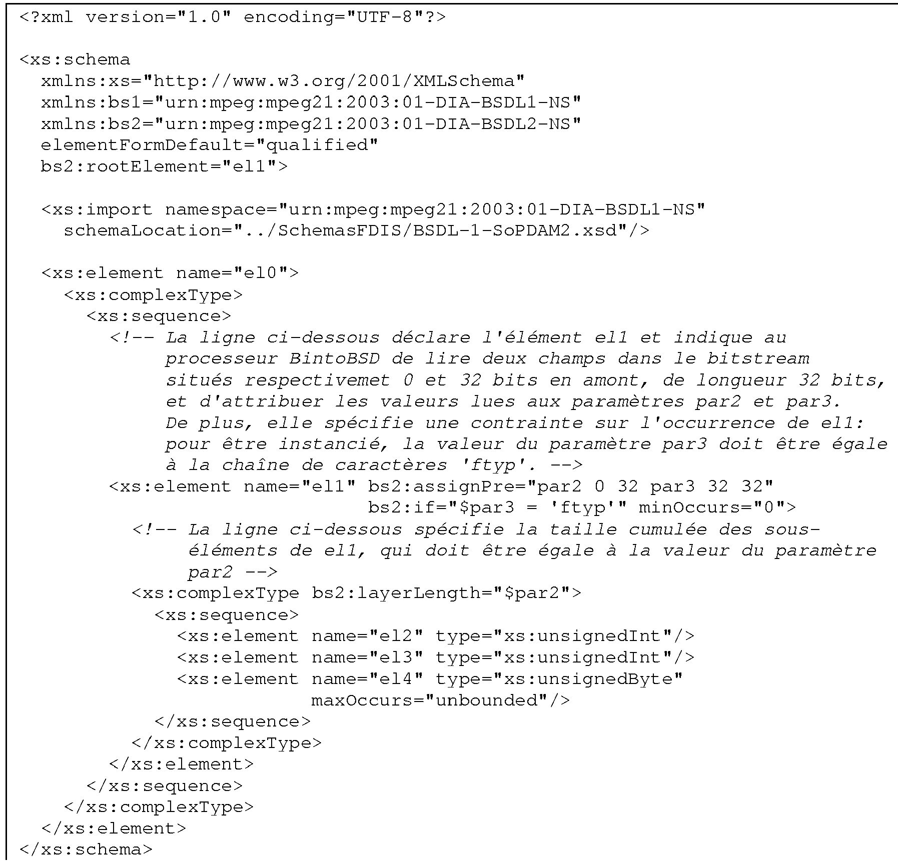

## Revendications

1. Procédé de génération d'un fichier de description (14) d'un flux binaire (11), à partir d'un schéma de description (15) décrivant une structure et un contenu conformes à un format prédéterminé et comprenant un ensemble d'attributs et d'éléments,
ledit flux binaire (11) étant composé d'une pluralité de champs,
**caractérisé en ce que** ledit procédé comprend :
- une étape d'assignation d'au moins une valeur d'au moins un champ identifié dudit flux à au moins une variable définie par un attribut dudit schéma de description, dit attribut d'assignation ;
- une étape de stockage de ladite au moins une variable ;
- une étape de détermination d'au moins une caractéristique d'au moins un élément dudit fichier de description, à partir d'une évaluation d'une expression conditionnelle portant sur ladite au moins une valeur ;
- une étape de génération d'une portion dudit fichier de description en fonction de la ou desdites caractéristiques déterminées lors de ladite étape de détermination.

2. Procédé de génération d'un fichier de description selon la revendication 1, **caractérisé en ce que** ledit attribut d'assignation comprend au moins un paramètre comprenant au moins ladite variable.

3. Procédé de génération d'un fichier de description selon l'une quelconque des revendications 1 et 2, **caractérisé en ce que** ledit champ identifié correspond à un champ en cours de lecture dans ledit flux binaire.

4. Procédé de génération d'un fichier de description selon l'une quelconque des revendications 1 et 2, **caractérisé en ce qu'**au moins un desdits paramètres comprend un triplet comprenant ladite variable et au moins deux informations d'identification appartenant au groupe comprenant au moins :
- une position de début de champ dans ledit flux binaire,
- une position de fin de champ dans ledit flux binaire,
- une longueur de champ dans ledit flux binaire,
lesdites informations d'identification permettant d'identifier ledit champ identifié.

5. Procédé de génération d'un fichier de description selon l'une quelconque des revendications 1 à 4, **caractérisé en ce que** ladite étape d'évaluation fait référence à ladite variable.

6. Procédé de génération d'un fichier de description selon l'une quelconque des revendications 1 à 5, **caractérisé en ce que** ladite au moins une caractéristique appartient au groupe comprenant au moins :
- un type d'un élément ;
- une longueur d'un élément ;
- un nombre d'occurrence d'un élément.

7. Procédé de génération d'un fichier de description selon l'une quelconque des revendications 1 à 6, **caractérisé en ce que** ledit flux binaire est un flux multimédia scalable.

8. Procédé de génération d'un fichier de description selon l'une quelconque des revendications 1 à 7, **caractérisé en ce que** ledit fichier de description est de type Bitstream Syntax Description et ledit schéma de description est de type Bitstream Syntax Schema selon la norme MPEG-21 Partie 7.

9. Dispositif de génération d'un fichier de description d'un flux binaire, à partir d'un schéma de description décrivant une structure et un contenu conformes à un format prédéterminé et comprenant un ensemble d'attributs et d'éléments,
ledit flux binaire étant composé d'une pluralité de champs,
**caractérisé en ce que** ledit dispositif comprend :
- des moyens d'assignation d'au moins une valeur d'au moins un champ identifié dudit flux à au moins une variable définie par un attribut dudit schéma de description, dit attribut d'assignation ;
- des moyens de stockage de ladite au moins une variable ;
- des moyens de détermination d'au moins une caractéristique d'au moins un élément dudit fichier de description, à partir d'une évaluation d'une expression conditionnelle portant sur ladite au moins une valeur ;
- des moyens de génération d'une portion dudit fichier de description en fonction de la ou desdites caractéristiques déterminées lors de ladite étape de détermination.

10. Produit programme d'ordinateur téléchargeable depuis un réseau de communication et/ou enregistré sur un support lisible par ordinateur et/ou exécutable par un processeur **caractérisé en ce qu'**il comprend des instructions de code de programme pour l'exécution des étapes du procédé de génération d'un fichier de description d'au moins une des revendications 1 à 8, lorsque ledit programme est exécuté sur un ordinateur.

11. Fichier de description d'un flux binaire **caractérisé en ce qu'**il est généré à l'aide du procédé de la revendication 1.

12. Procédé d'adaptation de contenus multimédia scalables **caractérisé en ce qu'**il comprend une phase de génération d'un fichier de description (14) d'un flux binaire (11), à partir d'un schéma de description (15) décrivant une structure et un contenu conformes à un format prédéterminé et comprenant un ensemble d'attributs et d'éléments,
ledit flux binaire (11) étant composé d'une pluralité de champs,
et **en ce que** ladite phase de génération comprend :
- une étape d'assignation d'au moins une valeur d'au moins un champ identifié dudit flux à au moins une variable définie par un attribut dudit schéma de description, dit attribut d'assignation ;
- une étape de stockage de ladite au moins une variable ;
- une étape de détermination d'au moins une caractéristique d'au moins un élément dudit fichier de description, à partir d'une évaluation d'une expression conditionnelle portant sur ladite au moins une valeur ;
- une étape de génération d'une portion dudit fichier de description en fonction de la ou desdites caractéristiques déterminées lors de ladite étape de détermination.

## Patentansprüche

1. Verfahren zur Erzeugung einer Beschreibungsdatei (14) eines Bitstroms (11) anhand eines Beschreibungsschemas (15), das eine Struktur und einen Inhalt beschreibt, die einem vorbestimmten Format entsprechen, und eine Menge von Attributen und Elementen umfasst,
wobei der Bitstrom (11) aus mehreren Feldern besteht,
**dadurch gekennzeichnet, dass** das Verfahren umfasst:
- einen Schritt der Zuweisung wenigstens eines Wertes wenigstens eines identifizierten Feldes des Bitstroms zu wenigstens einer Variablen, die durch ein Attribut des Beschreibungsschemas, Zuweisungsattribut genannt, definiert ist;
- einen Schritt der Speicherung der wenigstens einen Variablen;
- einen Schritt der Bestimmung wenigstens eines Merkmals wenigstens eines Elements der Beschreibungsdatei anhand einer Auswertung eines konditionalen Ausdrucks, der sich auf den wenigstens einen Wert bezieht;
- einen Schritt der Erzeugung eines Abschnitts der Beschreibungsdatei in Abhängigkeit von dem oder den Merkmalen, die im Schritt der Bestimmung bestimmt wurden.

2. Verfahren zur Erzeugung einer Beschreibungsdatei nach Anspruch 1, **dadurch gekennzeichnet, dass** das Zuweisungsattribut wenigstens einen Parameter umfasst, der wenigstens die Variable umfasst.

3. Verfahren zur Erzeugung einer Beschreibungsdatei nach einem der Ansprüche 1 und 2, **dadurch gekennzeichnet, dass** das identifizierte Feld einem Feld in dem Bitstrom entspricht, das gelesen wird.

4. Verfahren zur Erzeugung einer Beschreibungsdatei nach einem der Ansprüche 1 und 2, **dadurch gekennzeichnet, dass** wenigstens einer der Parameter ein Triplett umfasst, das die Variable und wenigstens zwei Identifikationsinformationen umfasst, die der Gruppe angehören, welche wenigstens umfasst:
- eine Feldanfangsposition in dem Bitstrom,
- eine Feldendposition in dem Bitstrom,
- eine Feldlänge in dem Bitstrom,
wobei diese Identifikationsinformationen ermöglichen, das identifizierte Feld zu identifizieren.

5. Verfahren zur Erzeugung einer Beschreibungsdatei nach einem der Ansprüche 1 bis 4, **dadurch gekennzeichnet, dass** sich der Schritt der Auswertung auf die Variable bezieht.

6. Verfahren zur Erzeugung einer Beschreibungsdatei nach einem der Ansprüche 1 bis 5, **dadurch gekennzeichnet, dass** das wenigstens eine Merkmal der Gruppe angehört, welche wenigstens umfasst:
- einen Typ eines Elements;
- eine Länge eines Elements;
- eine Anzahl des Auftretens eines Elements.

7. Verfahren zur Erzeugung einer Beschreibungsdatei nach einem der Ansprüche 1 bis 6, **dadurch gekennzeichnet, dass** der Bitstrom ein skalierbarer Multimediastrom ist.

8. Verfahren zur Erzeugung einer Beschreibungsdatei nach einem der Ansprüche 1 bis 7, **dadurch gekennzeichnet, dass** die Beschreibungsdatei vom Typ Bitstream Syntax Description und das Beschreibungsschema vom Typ Bitstream Syntax Schema gemäß der Norm MPEG-21, Teil 7 ist.

9. Vorrichtung zur Erzeugung einer Beschreibungsdatei eines Bitstroms anhand eines Beschreibungsschemas, das eine Struktur und einen Inhalt beschreibt, die einem vorbestimmten Format entsprechen, und eine Menge von Attributen und Elementen umfasst,
wobei der Bitstrom aus mehreren Feldern besteht, **dadurch gekennzeichnet, dass** die Vorrichtung umfasst:
- Mittel zur Zuweisung wenigstens eines Wertes wenigstens eines identifizierten Feldes des Bitstroms zu wenigstens einer Variablen, die durch ein Attribut des Beschreibungsschemas, Zuweisungsattribut genannt, definiert ist;
- Mittel zur Speicherung der wenigstens einen Variablen;
- Mittel zur Bestimmung wenigstens eines Merkmals wenigstens eines Elements der Beschreibungsdatei anhand einer Auswertung eines konditionalen Ausdrucks, der sich auf den wenigstens einen Wert bezieht;
- Mittel zur Erzeugung eines Abschnitts der Beschreibungsdatei in Abhängigkeit von dem oder den Merkmalen, die im Schritt der Bestimmung bestimmt wurden.

10. Computerprogrammprodukt, das von einem Kommunikationsnetz herunterladbar und/oder auf einem computerlesbaren Medium aufgezeichnet und/oder von einem Prozessor ausführbar ist, **dadurch gekennzeichnet, dass** es Programmcodeanweisungen für die Ausführung der Schritte des Verfahrens zur Erzeugung einer Beschreibungsdatei nach wenigstens einem der Ansprüche 1 bis 8, wenn das Programm auf einem Computer ausgeführt wird, umfasst.

11. Beschreibungsdatei eines Bitstroms, **dadurch gekennzeichnet, dass** sie mithilfe des Verfahrens nach Anspruch 1 erzeugt wird.

12. Verfahren zur Anpassung skalierbarer Multimedia-Inhalte, **dadurch gekennzeichnet, dass** es eine Phase der Erzeugung einer Beschreibungsdatei (14) eines Bitstroms (11) anhand eines Beschreibungsschemas (15) umfasst, das eine Struktur und einen Inhalt beschreibt, die einem vorbestimmten Format entsprechen, und eine Menge von Attributen und Elementen umfasst,
wobei der Bitstrom (11) aus mehreren Feldern besteht,
und dadurch, dass die Phase der Erzeugung umfasst:
- einen Schritt der Zuweisung wenigstens eines Wertes wenigstens eines identifizierten Feldes des Bitstroms zu wenigstens einer Variablen, die durch ein Attribut des Beschreibungsschemas, Zuweisungsattribut genannt, definiert ist;
- einen Schritt der Speicherung der wenigstens einen Variablen;
- einen Schritt der Bestimmung wenigstens eines Merkmals wenigstens eines Elements der Beschreibungsdatei anhand einer Auswertung eines konditionalen Ausdrucks, der sich auf den wenigstens einen Wert bezieht;
- einen Schritt der Erzeugung eines Abschnitts der Beschreibungsdatei in Abhängigkeit von dem oder den Merkmalen, die im Schritt der Bestimmung bestimmt wurden.

## Claims

1. Method for generating a description file (14) of a binary stream (11), based on a description schema (15) describing a structure and a content conforming to a predetermined format and comprising a set of attributes and elements,
said binary stream (11) being composed of a plurality of fields,
**characterized in that** said method comprises:
- a step of assigning at least one value of at least one identified field of said stream to at least one variable defined by an attribute of said description schema, called an assignment attribute;
- a step of storing said at least one variable;
- a step of determining at least one characteristic of at least one element of said description file, based on an evaluation of a conditional expression relating to said at least one value;
- a step of generating a portion of said description file as a function of said characteristic(s) determined during said determination step.

2. Method for generating a description file according to Claim 1, **characterized in that** said assignment attribute comprises at least one parameter comprising at least said variable.

3. Method for generating a description file according to either of Claims 1 and 2, **characterized in that** said identified field corresponds to a field in the course of being read in said binary stream.

4. Method for generating a description file according to either of Claims 1 and 2, **characterized in that** at least one of said parameters comprises a triplet comprising said variable and at least two pieces of identification information belonging to the group comprising at least:
- a start of field position in said binary stream,
- an end of field position in said binary stream,
- a field length in said binary stream,
said identification information enabling said identified field to be identified.

5. Method for generating a description file according to any of Claims 1 to 4, **characterized in that** said evaluation step makes reference to said variable.

6. Method for generating a description file according to any of Claims 1 to 5, **characterized in that** said at least one characteristic belongs to the group comprising at least:
- a type of an element;
- a length of an element;
- an occurrence number of an element.

7. Method for generating a description file according to any of Claims 1 to 6, **characterized in that** said binary stream is a scalable multimedia stream.

8. Method for generating a description file according to any of Claims 1 to 7, **characterized in that** said description file is of the Bitstream Syntax Description type and said description schema is of the Bitstream Syntax Schema type according to the MPEG-21 standard, Part 7.

9. Device for generating a description file of a binary stream, based on a description schema describing a structure and a content conforming to a predetermined format and comprising a set of attributes and elements, said binary stream being composed of a plurality of fields,
**characterized in that** said device comprises:
- means for assigning at least one value of at least one identified field of said stream to at least one variable defined by an attribute of said description schema, called an assignment attribute;
- means for storing said at least one variable;
- means for determining at least one characteristic of at least one element of said description file, based on an evaluation of a conditional expression relating to said at least one value;
- means for generating a portion of said description file as a function of said characteristic(s) determined during said determination step.

10. Computer program product which can be downloaded from a communication network and/or stored on a computer-readable medium and/or executed by a processor, **characterized in that** it comprises program code instructions for the execution of the steps of the method for generating a description file of at least one of Claims 1 to 8, when said program is executed on a computer.

11. Description file of a binary stream, **characterized in that** it is generated with the aid of the method of Claim 1.

12. Method for adapting scalable multimedia content, **characterized in that** it comprises a phase of generating a description file (14) of a binary stream (11), based on a description schema (15) describing a structure and a content conforming to a predetermined format and comprising a set of attributes and elements, said binary stream (11) being composed of a plurality of fields,
and **in that** said generation phase comprises:
- a step of assigning at least one value of at least one identified field of said stream to at least one variable defined by an attribute of said description schema, called an assignment attribute;
- a step of storing said at least one variable;
- a step of determining at least one characteristic of at least one element of said description file, based on an evaluation of a conditional expression relating to said at least one value;
- a step of generating a portion of said description file as a function of said characteristic(s) determined during said determination step.
